(19) Europäisches Patentamt / European Patent Office / Office européen des brevets

(11) **EP 2 871 251 B1**

(12) **EUROPEAN PATENT SPECIFICATION**

(45) Date of publication and mention
of the grant of the patent:
**15.01.2020 Bulletin 2020/03**

(21) Application number: **13816357.1**

(22) Date of filing: **11.07.2013**

(51) Int Cl.:
*C22C 38/00* [(2006.01)]     *C22C 38/26* [(2006.01)]
*C22C 38/60* [(2006.01)]     *C23C 8/10* [(2006.01)]
*C21D 8/02* [(2006.01)]      *C21D 6/00* [(2006.01)]
*C21D 9/46* [(2006.01)]      *C22C 38/02* [(2006.01)]
*C22C 38/04* [(2006.01)]     *C22C 38/06* [(2006.01)]
*C22C 38/22* [(2006.01)]

(86) International application number:
**PCT/JP2013/069004**

(87) International publication number:
**WO 2014/010680 (16.01.2014 Gazette 2014/03)**

(54) **FERRITIC STAINLESS STEEL SHEET AND METHOD FOR PRODUCING FERRITIC STAINLESS STEEL SHEET WITH OXIDE COATING FILM HAVING EXCELLENT CONDUCTIVITY AND ADHESION**

FERRITISCHES EDELSTAHLBLECH UND VERFAHREN ZUR HERSTELLUNG EINES FERRITISCHEN EDELSTAHLBLECHS MIT OXIDBESCHICHTUNGSFILM MIT HOHER LEITFÄHIGKEIT UND HAFTUNG

TÔLE D'ACIER INOXYDABLE FERRITIQUE ET UN PROCÉDÉ DE FABRICATION DE TÔLE D'ACIER INOXYDABLE FERRITIQUE AYANT UN FILM DE REVÊTEMENT D'OXYDE AYANT D'EXCELLENTES CONDUCTIVITÉ ET ADHÉRENCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.07.2012 JP 2012157540**
**20.06.2013 JP 2013129692**

(43) Date of publication of application:
**13.05.2015 Bulletin 2015/20**

(73) Proprietor: **Nippon Steel & Sumikin Stainless Steel Corporation**
**Chiyoda-ku**
**Tokyo 100-0004 (JP)**

(72) Inventors:
• **HATANO, Masaharu**
**Tokyo 100-0004 (JP)**

• **IKEGAMI, Osamu**
**Tokyo 100-0004 (JP)**

(74) Representative: **Vossius & Partner**
**Patentanwälte Rechtsanwälte mbB**
**Siebertstrasse 3**
**81675 München (DE)**

(56) References cited:
**EP-A2- 1 298 228        WO-A1-03/048402**
**WO-A1-2008/013498     JP-A- H08 109 443**
**JP-A- 2005 320 625      JP-A- 2006 318 652**
**JP-A- 2006 318 652      JP-A- 2008 101 240**
**JP-B1- 3 097 689**

**Description**

TECHNICAL FIELD

The present invention relates to a ferritic stainless steel sheet which forms an oxide film having excellent electrical conductivity at a high temperature and which has excellent film adhesion when being used for a long period of time. In particular, the present invention is suitable for a separator of a solid oxide fuel cell and a high-temperature member present around the separator.

The present application claims priority on Japanese Patent Application No. 2012-157540 filed on July 13, 2012 and Japanese Patent Application No. 2013-129692 filed on June 20, 2013, the contents of which are incorporated herein by reference.

BACKGROUND ART

Recently, due to problems such as depletion of fossil fuel represented by petroleum and global warming by $CO_2$ emission, implementation of a new system which can replace a power generation system of the related art has been desired. As such a system, "fuel cell" having a high practical value has attracted attention as a dispersed power source or a vehicle power source. There are sveeral types of cells. Among the several types of fuel cells, a solid oxide fuel cell (SOFC) is expected to be widely used in the future due to its high energy efficiency.

Regarding an operating temperature of the solid oxide fuel cell, recently, along with improvement of a solid electrolyte membrane, a SOFC system that operates at a temperature of 600°C to 900°C has been mainly used. As a material of a solid oxide fuel cell that operates in this temperature range, a cheap metal material having high workability is considered to be used instead of an expensive ceramic material having low workability.

Among properties required for a metal material, one property is "oxidation resistance" which is excellent in a temperature range of 600°C to 900°C. Next, other property is "thermal expansion coefficient" which is equivalent to that of a ceramic-based solid oxide. In addition to these fundamental properties, still other property is "electrical conductivity" which is excellent in a state of being in close contact with a ceramic-based solid oxide during power generation at a high temperature. However, from the viewpoint of wide use, one of the issues is to use a cheap metal material having excellent durability which is capable of suppressing the peeling of an oxide film and maintaining electrical conductivity when being used at a high temperature for a long period of time.

Examples of the metal material having excellent oxidation resistance at a high temperature include SUS309S and SUS310S defined in JIS G 4305. However, these high-Cr and high-Ni type austenitic stainless steels have a high thermal expansion coefficient. Therefore, during a start-stop operation, thermal deformation and scale peeling occur due to repetition of thermal expansion and thermal shrinkage, and thus SUS309S and SUS310S cannot be used. On the other hand, the thermal expansion coefficient of ferritic stainless steel is equivalent to that of a ceramic-based solid oxide. Therefore, ferritic stainless steel is the optimum candidate material as long as it meets requirements such as oxidation resistance and electrical conductivity.

In the related art, Patent Documents 1 to 3 disclose ferritic stainless steels having the above-described oxidation resistance and electrical conductivity. Patent Documents 1 to 3 disclose high-Cr type ferritic stainless steels containing one or more selected from the group consisting of (Y, REM (rare earth element), and Zr). The inventions disclosed in these Patent Documents are based on a technological thought of forming a Cr-based oxide film in a steel surface and adding (Y, REM, Zr) thereto to improve oxidation resistance and electrical conductivity of the Cr-based oxide film.

On the other hand, a ferritic stainless steel is disclosed in which electrical conductivity is imparted without a decrease in oxidation resistance irrespective of addition of a rare earth element. The ferritic stainless steel disclosed in Patent Document 4 is based on a technological thought of forming a Cr-based oxide film in a steel surface and adding highly conductive Cu thereto to improve electrical conductivity without a decrease in oxidation resistance irrespective of addition of a rare earth element such as (Y, REM, Zr). In Patent Document 5, by adopting a film structure containing, as a major component, an Al-based oxide film in which Ti or Nb is present together, the electrical conductivity of the film is improved.

Patent Document 6 discloses a ferritic chromium stainless steel with the following composition in percent by weight: C max 0.1, Si 0.1-1, Mn max 0.6, Cr 20-25, Ni max 2, Mo 0.5-2, Nb 0.3-1.5, Ti max 0.5, Zr max 0.5, REM max 0.3, Al max 0.1, N max 0.07, balance Fe and normally occurring impurities, and wherein the content of Zr+Ti is at least 0.2 %.

Patent Document 7 discloses a ferritic stainless steel sheet for exterior use, which has a composition consisting of, by weight, ≤0.03% C, ≤0.3% Si, ≤1.0% Mn, ≤0.08% P, ≤0.020% S, 10-35% Cr, ≤0.08% N, 0.05-2.0% Nb, 0.008-0.80% Al, and the balance Fe with inevitable impurities and further containing, if necessary, one or more kinds among 0.05-2.0% Ti, 0.05-1.0% Cu, 0.05-5.0% Ni, and 0.05-5.0% Mo and further has, on its surface, an oxide film consisting of, in the proportions of cations alone excluding C, O, and N, ≥ 15 atomic % Al, ≥ 6 atomic % Nb, and the balance oxides of the elements in the steel, by the average concentrations in the film, and containing Ti only in the case where Ti is added to the steel; and formed by bright annealing.

Patent Document 8 discloses a solid oxide type fuel cell separator material in which a TiN coating layer having a thickness of 0.05-100 μm is formed to a ferrite stainless steel of 11-40 mass% of Cr, a Ti concentration of the TiN coating layer is adjusted to more than 40 atom%, and the ferrite stainless steel contains C: below 0.1 mass%, N: below 0.1 mass%, Si: below 1.5 mass%, Mn: below 1.5 mass%, P: below 0.10 mass%, and S: below 0.01 mass%, in addition to the Cr.

As described above, in the related art, as the metal material for a SOFC separator, a high-Cr type ferritic stainless steel is used in which oxidation resistance and electrical conductivity are improved by forming a Cr-based oxide film and subjecting the Cr-based oxide film to the following treatment: (1) addition of a very expensive rare earth element (Y, REM, Zr); or (2) addition of highly conductive Cu or modification into an Al-based oxide film in which Ti or Nb is present together. The stainless steel subjected to the former treatment (1) has a large problem in cost reduction from the viewpoint of wide use. The stainless steel subjected to the latter treatment (2) has a problem in that electrical conductivity decreases along with the growth of an oxide film when being used at a high temperature for a long period of time. That is, there has yet to be developed a ferritic stainless steel with an oxide film which is excellent in electrical conductivity and adhesion when being used for a long period of time irrespective of addition of a rare earth element and is industrially mass-producible at a low cost.

Patent Document 1: Japanese Unexamined Patent Application, First Publication No. 2003-173795

Patent Document 2: Japanese Unexamined Patent Application, First Publication No. 2005-320625

Patent Document 3: Japanese Unexamined Patent Application, First Publication No. 2006-57153

Patent Document 4: Japanese Unexamined Patent Application, First Publication No. 2006-9056

Patent Document 5: Japanese Unexamined Patent Application, First Publication No. 2012-67391

Patent Document 6: International Application Publication WO 2008/013498 A1

Patent Document 7: Japanese Unexamined Patent Application, First Publication No. H08-109443 A

Patent Document 8: Japanese Unexamined Patent Application, First Publication No. 2006-318652 A

Non-Patent Document 1: Heat Treatment; 33, (1993), 251

DISCLOSURE OF THE INVENTION

Problems to be Solved by the Invention

The present invention is based on a technological thought of using a cheap and mass-producible ferritic stainless steel to achieve electrical conductivity and adhesion of an oxide film equivalent to those of a ferritic stainless steel of the related art to which a rare earth element is added. That is, the present invention has been made to provide a ferritic stainless steel sheet for a SOFC separator having excellent durability, which is capable of forming an oxide film having excellent electrical conductivity and excellent adhesion by a heat treatment before use or by heat generated during the operation of a SOFC, irrespective of addition of a rare earth element which has been the problem in the related art.

Means for Solving the Problems

(1) A ferritic stainless steel sheet consisting of: by mass%,

C: 0.02% or less;
Si: 0.01 to 0.15%;
Mn: 0.3% to 1%;
P: 0.04% or less;
S: 0.003% or less;

Cr: 20% to 25%;
Mo: 0.5% to 2%;
Al: 0.01 to 0.1%;
N: 0.02% or less; and
Nb: 0.001% to 0.5%, optionally one or more selected from the group consisting of Ti: 0.5% or less, V: 0.5% or less, Ni: 2% or less, Cu: 1% or less, Sn: 1% or less, B: 0.005% or less, Mg: 0.005% or less, Ca: 0.005% or less, W: 1% or less, Co: 1% or less, Sb:0.5% or less, Zr: 0.1% or less, La: 0.1% or less, Y: 0.1% or less, and REM: 0.1% or less,
a balance of Fe and unavoidable impurities,
in which an expression of $2.5<Mn/(Si+Al)<8.0$ is satisfied.

In this expression, Mn, Si, and Al represent the contents (mass%) of the respective elements, wherein an oxide film excellent in electrical conductivity and adhesion in which Cr and Mn are concentrated is formed on a steel sheet surface, and the oxide film contains $Cr_2O_3$ as a major component on 10 % or more of $Cr_2MnO_4$.
(2) A method for producing a ferritic stainless steel sheet excellent in electrical conductivity and adhesion of an oxide film, the method including:
subjecting the ferritic stainless steel sheet according to (1) to a pre-oxidation treatment in a temperature range of 500°C to 1000°C for 24 hours or shorter.

Hereinafter, the invention according to the steel sheet of (1) described above will be referred to as "the present invention", respectively. In addition, the inventions according to (1) and (2) described above will be collectively referred to as "the present invention".

BRIEF DESCRIPTION OF THE DRAWINGS

FIG. 1 is a diagram illustrating a relationship between Mn/(Si+Al) and a contact resistance ratio at 750°C.
FIG. 2 is a diagram illustrating a relationship between Mn/(Si+Al) and a peeling ratio at 750°C.

EMBODIMENTS FOR CARRYING OUT THE INVENTION

In order to solve the above-described problems, the present inventors have thoroughly studied and investigated using a high-Cr ferritic stainless steel sheet on a relationship between oxidation resistance for the usage in a SOFC at a high temperature for a long period of time, and the contents of Mn, Si, and Al which affect electrical conductivity; and thereby, the present invention was completed. Hereinafter, the findings obtained by the present invention will be described.
The electrical conductivity and the adhesion of an oxide film were greatly improved by reducing the contents of Si and Al to be as small as possible and adding 0.3% or more of Mn. Assuming that the operating temperature range of a SOFC is in a range of 600°C to 900°C, an oxide film contains $Cr_2O_3$ as a major component and forms a $M_3O_4$ type oxide (M=Mn, Cr) in addition to $Cr_2O_3$. Typically, it is known that a Si oxide or an Al oxide greatly improves electrical resistance. By simultaneously suppressing the formation of a Si oxide or an Al oxide and the concentration of Si or Al in a steel interface, electrical conductivity can be improved. Further, it was found that, by allowing a $M_3O_4$ type oxide to be present together in the $Cr_2O_3$ oxide film, a behavior in which electrical conductivity was further improved was shown. Regarding such a mechanism relating to the improvement of electrical conductivity by the modification of the oxide film, there are still many unclear points, but this mechanism may be made by the following effects (a) and (b): (a) lattice defects which are introduced into the $Cr_2O_3$ film by the formation of the $M_3O_4$ type oxide serve to improve electrical conductivity; and (b) the $M_3O_4$ type oxide having a higher valence than $Cr_2O_3$ imparts a good conductor effect (donor effect) from a semiconductor.
The oxide film suppressed peeling at an interface between the oxide film and the base steel and had excellent adhesion. It is considered that the adhesion of the oxide film may be improved not only by suppression of an internal oxide caused by the reduction in the contents of Si and Al but also by the formation of a Mn oxide (MnO) at the interface between the oxide film and the base steel.
As described above, the following completely new finding was obtained: by adding a necessary amount of Mn to an oxide film while reducing Si and Al, the adhesion of the oxide film can be improved without a decrease in the soundness (oxidation resistance) of the $Cr_2O_3$ film, and electrical conductivity can be imparted irrespective of addition of a rare earth element. The inventions according to the above-described (1) to (5) have been completed based on the above-described investigation results.

Hereinafter, each requirement of the present invention will be described in detail. "%" of the content of each element represents "mass%".

The reason for limiting each element will be described below.

C is an unavoidable impurity element contained in steel. C inhibits the soundness of the $Cr_2O_3$ film which is the target of the present invention. Therefore, the less the C content, the better. An excessive decrease of the C content causes a large increase in refining cost. Accordingly, the upper limit of the C content is set to be 0.02%. From the viewpoints of oxidation resistance and producibility, the lower limit of the C content is preferably 0.001%, and the upper limit thereof is preferably 0.01%.

Si is a typical deoxidizing element. Si inhibits the electrical conductivity and the adhesion of the oxide film which are the targets of the present invention. Therefore, the less the Si content, the better. An excessive decrease of the Si content causes an increase in refining cost. Accordingly, the upper limit of the Si content is set to be 0.15%. From the viewpoint of improving both of the target properties of the present invention and producibility, the lower limit of the Si content is 0.01% and preferably 0.05%. The upper limit of the Si content is preferably 0.12% and more preferably 0.1%.

Mn effectively functions as a deoxidizing element. In addition, as described above, Mn has an effect of improving the electrical conductivity and the adhesion of the oxide film which are the targets of the present invention. In the present invention, in the case where the Mn content is 0.3% or more, the effects are exhibited. Accordingly, the lower limit of the Mn content is set to be 0.3%. An excessive addition of Mn inhibits the soundness of the $Cr_2O_3$ film and causes a decrease in oxidation resistance and electrical conductivity. Therefore, the upper limit of the Mn content is set to be 1%. From the viewpoints of effectively exhibiting the target properties of the present invention, the lower limit of the Mn content is preferably 0.4%, and the upper limit thereof is preferably 0.8%.

P is an unavoidable impurity element contained in steel. P causes a decrease in oxidation resistance which is the target of the present invention. Therefore, the upper limit of the P content is set to be 0.04%. However, an excessive decrease of the P content causes an increase in refining cost. Accordingly, the lower limit of the P content is preferably set to be 0.01%. From the viewpoints of oxidation resistance and producibility, the lower limit of the P content is more preferably 0.02%, and the upper limit thereof is preferably 0.03%.

S is an unavoidable impurity element contained in steel. S decreases oxidation resistance which is the target of the present invention. In particular, the presence of a Mn-based inclusion or a solid-solubilized S functions as an origin to deteriorate the $Cr_2O_3$ film when being used at a high temperature for a long period of time. Therefore, the less the S content, the better. An excessive decrease of the S content causes an increase in material and refining cost. Accordingly, the upper limit of the S content is set to be 0.003%. From the viewpoints of oxidation resistance, hot workability, and producibility, the lower limit of the S content is preferably 0.0002%, and the upper limit thereof is preferably 0.001%.

Cr is a fundamental constituent element from the viewpoints of securing oxidation resistance, which is the target of the present invention, and the thermal expansion coefficient which is the requirement as a metal separator. In the present invention, in the case where the Cr content is less than 20%, the target fundamental properties are not sufficiently secured. Accordingly, the lower limit of the Cr content is set to be 20%. However, an excessive addition of Cr causes a large decrease in the toughness and ductility of hot-rolled steel material and inhibits producibility. From the viewpoint of suppressing the alloy cost which is the target of the present invention, the upper limit of the Cr content is set to be 25%. From the viewpoints of the fundamental properties, producibility, and cost, the lower limit of the Cr content is preferably 21%, and the upper limit thereof is preferably 23%.

Mo is an effective constituent element from the viewpoints of securing the thermal expansion coefficient which is the requirement of the present invention as a metal separator. Further, Mo functions as a solid solution strengthening element and Mo effectively serves to secure a high-temperature strength necessary as a high-temperature member. In order to obtain these effects, the lower limit of the Mo content is set to be 0.5%. An excessive addition of Mo causes an increase in material cost and inhibits producibility. Accordingly, the upper limit of the Mo content is 2%. From the viewpoint of the effect on the cost, the lower limit of the Mo content is preferably 0.8%, and the upper limit thereof is preferably 1.5%.

Al is a strong deoxidizing element. Al has an effect of inhibiting the electrical conductivity and the adhesion of the oxide film which are the targets of the present invention. Therefore, the less the Al content, the better. However, in order to reduce the Si content, it is preferable that a necessary amount of Al be added as an deoxidizing element. In order to obtain the deoxidizing effect, the lower limit of the Al content is set to be 0.01 %. From the viewpoint of securing the properties of the oxide film which are the targets of the present invention, the upper limit of the Al content is set to be 0.1%. From the viewpoints of improving both of the target properties of the present invention and producibility, the lower limit of the Al content is more preferably 0.02%, and the upper limit thereof is preferably 0.06%.

N is an unavoidable impurity element contained in steel. N inhibits the soundness of the $Cr_2O_3$ film which is the target of the present invention. Therefore, the less the N content, the better. Accordingly, the upper limit of the N content is set to be 0.02%. An excessive decrease of the N content causes a large increase in refining cost. From the viewpoints of oxidation resistance and producibility, the lower limit of the N content is preferably 0.001%, and the upper limit thereof is preferably 0.01%.

Nb is added because Nb has effects of immobilizing C and N as carbon nitrides, improving oxidation resistance which is the target of the present invention, and improving a necessary strength required as a high-temperature member. In order to obtain these effects, the lower limit of the Nb content is set to be 0.001%. An excessive addition of Nb causes an increase in material cost and inhibits workability. Therefore, the upper limit of the Nb content is 0.5%. From the viewpoint of the effect on the cost, the lower limit of the Nb content is preferably 0.05%, and the upper limit thereof is preferably 0.35%.

The ferritic stainless steel sheet according to the present invention contains the above-described components, and it is necessary to define a relationship between the Mn content and the (Si+Al) content from the viewpoints of the electrical conductivity and the adhesion of the oxide film which are the targets of the present invention. In the oxide film containing $Cr_2O_3$ as a major component in which internal oxidation by Si or Al is suppressed, in order to allow Mn to be concentrated and to form a $M_3O_4$ type oxide (M=Mn, Cr) to obtain electrical conductivity, it is necessary that $Mn/(Si+Al)>2.5$ be satisfied. On the other hand, in the case of $Mn/(Si+Al) \geq 8.0$, the formation of the $M_3O_4$ type oxide is accelerated, the protection of the oxide film containing $Cr_2O_3$ as a major component is inhibited, and electrical conductivity and adhesion are decreased due to the growth of the oxide film. Accordingly, in order to obtain the target properties, it is necessary that $2.5<Mn/(Si+Al)<8.0$ be satisfied. From the viewpoints of alleviating an excessive decrease in the Si and Al contents and obtaining the target properties, a preferable range is $4.0<Mn/(Si+Al)<7.0$. In the expression, Mn, Si, and Al represent the contents (mass%) of the respective elements.

The following elements may be selectively added.

Similarly to Nb, Ti and V have effects of immobilizing C and N as carbon nitrides and improving oxidation resistance which is the target of the present invention. Therefore, Ti and V may be selectively added. In the case where Ti and V are added to obtain these effects, the lower limits of the contents of Ti and V are preferably 0.001%. An excessive addition of Ti and V causes an increase in material cost and inhibits workability. In the case where Ti and V are added, the upper limits of the contents of Ti and V are 0.5%. From the viewpoint of the effect on the cost, the lower limits of the contents of Ti and V are preferably 0.05%, and the upper limits thereof are preferably 0.35%.

Ni functions as a solid solution strengthening element and contributes to an increase in high-temperature strength which is necessary as a structure material. Therefore, Ni may be selectively added. In the case where Ni is added to obtain these effects, the lower limit of the Ni content is preferably 0.1%. An excessive addition of Ni causes an increase in material cost and inhibits workability. In the case where Ni is added, the upper limit of the Ni content is 2%. In the case where Ni is added, from the viewpoint of the effect on the cost, the lower limit of the Ni content is preferably 0.2%, and the upper limit thereof is preferably 0.8%.

B, Mg, and Ca have an effect of improving hot workability and thus B, Mg, and Ca may be selectively added. In the case where B, Mg, and Ca are added to obtain the effect, the lower limits of the contents of B, Mg, and Ca are preferably 0.0002%. However, an excessive addition of B, Mg, and Ca causes a decrease in producibility and surface defects during hot working. In the case where B, Mg, and Ca are added, the upper limits of the contents of B, Mg, and Ca are set to be 0.005%. In the case where B, Mg, and Ca are added, from the viewpoint of producibility and the effects, the lower limits of the contents of B, Mg, and Ca are preferably 0.0003%, and the upper limits thereof are preferably 0.002%.

Cu, Sn, and Sb have the same effects as Ni. An excessive addition of Cu, Sn, and Sb has an effect of inhibiting the adhesion of the oxide film and producibility due to precipitation and segregation. In the case where each of Cu and Sn is added, the upper limit of the content of each of Cu and Sn is 1.0% and preferably 0.5% or less. In the case where Sb is added, the upper limit of the Sb content is 0.5% and preferably 0.2% or less. In the case where Cu, Sn, and Sb are added, the lower limit of the Cu content is 0.1%, the lower limit of the Sn content is 0.01%, and the lower limit of the Sb content is 0.005%.

W and Co have the solid solution strengthening effect similarly to Ni and also have an effect of improving electrical conductivity by being concentrated in the oxide film and immediately below the oxide film. W and Co are expensive elements. In the present invention, in order to exhibit these effects, W and Co may be selectively added. In the case where each of W and Co is added, the upper limit of the content of each of W and Co is 1% and preferably 0.5% or less. In the case where each of W and Co is added, the lower limit of the content of each of W and Co is preferably 0.1%.

Zr, La, Y, and REM have a high effect of improving the electrical conductivity and soundness of the oxide film in the related art. Zr, La, Y, and REM are very expensive elements. The target of the present invention is to obtain the properties irrespective of addition of these elements. However, Zr, La, Y, and REM may be selectively added to exhibit higher effects. In the case where Zr, La, Y, and REM are added, the lower limit of the content of Zr, La, Y, and REM is preferably 0.001%. In the case where Zr, La, Y, and REM are added, the upper limits of the contents of Zr, La, Y, and REM are set to be 0.1%. In the case where Zr, La, Y, and REM are added, from the viewpoint of the effect on the cost, the upper limits of the contents of Zr, La, Y, and REM are more preferably 0.01%, and the upper limits thereof are preferably 0.05%.

The ferritic stainless steel sheet according to the present invention contains the above-described components, and Mn/(Si+Al) is defined from the viewpoints of the electrical conductivity and the adhesion of the oxide film. In the present invention, the production method is not particularly limited.

For the ferritic stainless steel sheet according to the present invention, a cold-rolled and annealed steel sheet is used, and the steel sheet is obtained by a method which includes: descaling an annealed or non-annealed hot-rolled steel strip; cold-rolling the steel strip after the descaling; and subsequently performing finish annealng and descaling. For the ferritic stainless steel sheet according to the present invention, a hot-rolled and annealed steel sheet which is not subjected to cold-rolling may be used.

Further, examples of a gas pipe include a welded pipe produced from a steel sheet. The pipe is not limited to the welded pipe. The pipe may be a seamless pipe produced by hot working.

The temperature of the above-described finish annealing after the cold rolling is preferably 800°C to 1100°C. In the case where the temperature is lower than 800°C, softening and recrystallization becomes insufficient; and thereby, predetermined material properties may not be obtained. On the other hand, in the case where the temperature is higher than 1100°C, crystal grains coarsen; and thereby, the toughness and ductility of steel may be decreased.

Further, in order to improve the durability (electrical conductivity and adhesion) when long-term use is assumed, it is preferable that the ferritic stainless steel sheet be subjected to a pre-oxidation treatment before being used as a SOFC separator. Thereby, in the initial stage of the operation of a SOFC system, it is effective to uniformly form a Cr- and Mn-rich and dense oxide film (dense oxide film in which Cr and Mn are concentrated) in a steel sheet surface. By forming the dense oxide film in the surface in advance before the operation of the SOFC system, the uniformity and barrier property of the oxide film which is formed in the initial stage are improved, and the electrical conductivity and oxidation resistance when being used for a long period of time can be further improved as compared to the state of the metal surface. Pre-oxidation treatment conditions are preferably set to be at a temperature of 500°C to 1000°C for 1 min to 24 hr. The pre-oxidation treatment may be performed in the air, in inert gas, in the air containing water vapor, or in inert gas containing water vapor.

Here, "the Cr- and Mn-rich oxide film" in the steel sheet surface is the oxide film containing $Cr_2O_3$ as a major component and contains 10% or more of $Cr_2MnO_4$. The oxide film can be evaluated by the X-ray diffraction analysis of the surface. Specifically, calculation is performed from an integral intensity ratio in highest diffraction peaks of $Cr_2O_3$ and $Cr_2MnO_4$.

EXAMPLES

Hereinafter, examples of the present invention will be described.

Ferritic stainless steel containing components shown in Tables 1 and 2 were melted, and hot rolling was performed to obtain hot-rolled steel sheets having thicknesses of 4.0 mm to 5.0 mm. These hot-rolled steel sheets were subjected to annealing at a temperature of 900°C to 1050°C and acid pickling. Next, the steel sheets were subjected to intermediate annealing and cold rolling repeatedly to obtain cold-rolled steel sheets having a thickness of 0.4 mm, and then the steel sheets were subjected to annealing at a temperature of 900°C to 1000°C and acid pickling. As a result, test samples were obtained.

In Steel Nos. 1 to 20, the content of each element is in the defined range of the present invention, and Mn/(Si+Al) satisfies the defined range of the present invention. On the other hand, in Steel Nos. 21 to 25, the content of each element is out of the predetermined range of the present invention, and Mn/(Si+Al) satisfies the defined range of the present invention. In Steel Nos. 26 and 27, the content of each element is in the predetermined range of the present invention, and Mn/(Si+Al) is out of the defined range of the present invention. In Steel Nos. 28 to 30, both of the content of each element and Mn/(Si+Al) are out of the defined ranges of the present invention. Steel No. 30 is a REM-added ferritic stainless steel well-known in the art. The electrical conductivity and the adhesion of the oxide film which is the target of the present invention were determined with Steel No. 30 as a reference.

The electrical conductivity and the adhesion of the oxide film were evaluated after performing an oxidation test in the following manner in consideration of a long-term use and forming the oxide film in the surface.

With regard to the oxidation test accelerated test conditions were considered in which the amount of oxides formed by the operation for 45000 hours (5 years) at the assumed standard SOFC operating temperature of 750°C was experimentally simulated. The growth speed of the oxide film can be obtained from Non-Patent Document 1, and in the case of the $Cr_2O_3$ oxide film, an increase in the amount of oxides after the operation for 45000 hours at 750°C is expected to be about 1.0 mg/cm², As accelerated test conditions (temperature, time) where an increase in the corresponding amount of oxides can be simulated at a relatively short time, 900°C and 400 hr were selected. The size of a test piece was set to thickness×25 mm×20 mm, and a surface and end surfaces were polished by wet polishing using emery paper #600. After the accelerated test, the electrical conductivity and the adhesion of the oxide film were evaluated.

The electrical conductivity of the oxide film was measured by a four-terminal method after firing a Pt mesh having a size of 25 mm×20 mm on a sample surface at 900°C for 30 minutes and attaching a current terminal and a voltage terminal to the Pt mesh with a Pt paste. Specifically, the sample was put into a muffle furnace to be heated to 750°C. Next, a voltage drop value (ΔV) was measured during applying a current (I), and a contact resistance (R=ΔV/I) was obtained. Based on the above results, a contact resistance ratio (p=R×S, S: conductive area) was calculated as an evaluation index for electrical conductivity.

As the Pt paste, TR-7905 manufactured by Tanaka Kikinzoku Kogyo K. K. was used. As the Pt mesh, one having a diameter of $\phi$0.076 mm manufactured by Tanaka Kikinzoku Kogyo k. K. was used. As a device for measuring the voltage drop value, TR6143 (DC power supply) manufactured by Advantest Corporation was used.

The adhesion of the oxide film was evaluated by measuring a peeling ratio of the oxide film surface. Specifically, the evaluation was performed in the following procedure. After the oxidation test, external images of front and back surfaces of a test piece were obtained at a magnification of about two times the actual size. Next, the number of marks from which oxides were scattered from the surface was counted. Among these marks, marks having sizes of 0.5 mm or more in terms of the actual size were selected, and the size thereof was adjusted to a size that can be recognized by visual inspection. A peeling ratio (marks/cm$^2$) was calculated by dividing the number of marks counted from the total 4 surfaces including the front and back surfaces of two samples by the surface area (20 cm$^2$). A criterion based on which it was determined that the peeling of the oxide film did not occur and the adhesion was excellent was a case where the number of point-like marks was 1 or less per surface. That is, the criterion was "peeling ratio≤0.2" (4 marks/20 cm$^2$).

As one of the fundamental properties of a steel plate for a separator, a thermal expansion coefficient at 750°C was measured. The size of a sample was 5 mm (width)×15 mm (length), the atmosphere during heating was Ar atmosphere, and the thermal expansion coefficient was calculated with 25°C as a starting point. As the measuring device, TMA4000 manufactured by Bruker Corporation was used.

The contact resistance ratios and the peeling ratios of the oxide films of the test samples of Steel Nos. 1 to 30 and the thermal expansion coefficients of the test samples of Steel Nos. 1 to 30 are shown in Tables 3 and 4.

Table 1

| | Steel No. | Component (mass%) | | | | | | | | | | Mn/ (Si+Al) | Component (mass%) |
|---|---|---|---|---|---|---|---|---|---|---|---|---|---|
| | | C | Si | Mn | P | S | Cr | Mo | Al | N | Nb | | Others |
| Examples of Present Invention | 1 | 0.006 | 0.09 | 0.48 | 0.021 | 0.0004 | 22.3 | 1.1 | 0.055 | 0.018 | 0.25 | 3.3 | |
| | 2 | 0.005 | 0.06 | 0.79 | 0.022 | 0.0005 | 22.4 | 0.9 | 0.048 | 0.009 | 0.15 | 7.3 | |
| | 3 | 0.007 | 0.12 | 0.35 | 0.023 | 0.0003 | 22.2 | 1.2 | 0.015 | 0.009 | 0.28 | 2.6 | |
| | 4 | 0.009 | 0.03 | 0.45 | 0.028 | 0.0005 | 22.5 | 1.2 | 0.080 | 0.008 | 0.29 | 4.1 | |
| | 5 | 0.002 | 0.08 | 0.31 | 0.023 | 0.0003 | 21.8 | 0.9 | 0.028 | 0.005 | 0.08 | 2.9 | |
| | 6 | 0.019 | 0.07 | 0.55 | 0.024 | 0.0004 | 23.1 | 1.3 | 0.035 | 0.006 | 0.27 | 5.2 | |
| | 7 | 0.006 | 0.11 | 0.48 | 0.028 | 0.0005 | 24.8 | 0.5 | 0.042 | 0.008 | 0.25 | 3.2 | |
| | 8 | 0.007 | 0.09 | 0.52 | 0.027 | 0.0005 | 20.2 | 1.8 | 0.057 | 0.011 | 0.35 | 3.5 | |
| | 9 | 0.009 | 0.07 | 0.62 | 0.025 | 0.0003 | 20.8 | 1.5 | 0.058 | 0.002 | 0.45 | 4.8 | |
| | 10 | 0.009 | 0.11 | 0.53 | 0.018 | 0.0006 | 21.8 | 1.1 | 0.052 | 0.011 | 0.22 | 3.3 | Ti:0.11 |
| | 11 | 0.008 | 0.11 | 0.52 | 0.018 | 0.0006 | 21.3 | 0.9 | 0.053 | 0.012 | 0.18 | 3.2 | Ti:0.12, V:0.05 |
| | 12 | 0.007 | 0.09 | 0.48 | 0.019 | 0.0006 | 21.8 | 1.1 | 0.038 | 0.011 | 0.19 | 3.8 | Ni:0.3 |
| | 13 | 0.006 | 0.11 | 0.49 | 0.018 | 0.0006 | 22.3 | 1.1 | 0.061 | 0.009 | 0.23 | 2.9 | V:0.05, Ni:0.2, B:0.001 |
| | 14 | 0.009 | 0.11 | 0.61 | 0.021 | 0.0006 | 21.8 | 1.1 | 0.048 | 0.007 | 0.18 | 3.9 | Mg:0.0007, Ca:0.0008 |
| | 15 | 0.006 | 0.09 | 0.62 | 0.018 | 0.0006 | 20.6 | 1.2 | 0.052 | 0.011 | 0.22 | 4.4 | Zr:0.01 |
| | 16 | 0.008 | 0.06 | 0.65 | 0.026 | 0.0003 | 22.5 | 1.5 | 0.035 | 0.008 | 0.25 | 6.8 | Ti:0.12, La:0.02, REM:0.01 |
| | 17 | 0.005 | 0.09 | 0.52 | 0.021 | 0.0004 | 22.1 | 1.2 | 0.055 | 0.011 | 0.27 | 3.6 | Cu:0.2 |
| | 18 | 0.004 | 0.09 | 0.45 | 0.021 | 0.0004 | 22.4 | 1.3 | 0.055 | 0.011 | 0.28 | 3.1 | Cu:0.1, Sn:0.05, Zr:0.01 |
| | 19 | 0.016 | 0.11 | 0.51 | 0.025 | 0.0005 | 22.6 | 1.1 | 0.052 | 0.011 | 0.31 | 3.1 | Co:0.1, W:0.3, Sb:0.01 |
| | 20 | 0.005 | 0.06 | 0.79 | 0.022 | 0.0005 | 22.4 | 0.9 | 0.048 | 0.009 | 0.15 | 7.3 | Pre-Oxidation Treatment of Steel No. 2 at 800°C for 12 h |

Underlined value represents that the value is out of the range of the present invention.

EP 2 871 251 B1

Table 2

| | Steel No. | Component (mass%) | | | | | | | | | | Mn/(Si+Al) | Component (mass%) |
|---|---|---|---|---|---|---|---|---|---|---|---|---|---|
| | | C | Si | Mn | P | S | Cr | Mo | Al | N | Nb | | Others |
| Comparative Examples | 21 | 0.008 | 0.18 | 0.54 | 0.022 | 0.0005 | 22.1 | 0.7 | 0.025 | 0.013 | 0.28 | 2.6 | |
| | 22 | 0.011 | 0.11 | 1.10 | 0.028 | 0.0003 | 20.8 | 1.3 | 0.065 | 0.014 | 0.29 | 6.3 | |
| | 23 | 0.006 | 0.06 | 0.70 | 0.027 | 0.0003 | 19.5 | 0.6 | 0.065 | 0.008 | 0.31 | 5.6 | Ti:0.15 |
| | 24 | 0.007 | 0.08 | 0.51 | 0.025 | 0.0005 | 20.5 | 0.9 | 0.110 | 0.012 | 0.29 | 2.7 | |
| | 25 | 0.008 | 0.06 | 0.35 | 0.027 | 0.0003 | 20.2 | 0.4 | 0.035 | 0.008 | 0.28 | 3.7 | |
| | 26 | 0.004 | 0.07 | 0.86 | 0.027 | 0.0003 | 22.5 | 1.1 | 0.035 | 0.013 | 0.27 | 8.2 | |
| | 27 | 0.003 | 0.09 | 0.35 | 0.022 | 0.0003 | 22.1 | 0.7 | 0.065 | 0.014 | 0.31 | 2.3 | |
| | 28 | 0.021 | 0.21 | 0.62 | 0.023 | 0.0004 | 21.9 | 1.1 | 0.070 | 0.022 | 0.28 | 2.2 | |
| | 29 | 0.023 | 0.16 | 0.75 | 0.027 | 0.0003 | 21.1 | 1.2 | 0.160 | 0.012 | 0.27 | 2.3 | |
| Comparative Example REM | 30 | 0.022 | 0.27 | 0.30 | 0.022 | 0.0005 | 22.5 | - | 0.170 | 0.006 | 0.15 | 0.7 | REM:0.04 |
| Underlined value represents that the value is out of the range of the present invention. | | | | | | | | | | | | | |

EP 2 871 251 B1

Table 3

|  | Steel No. | Contact Resistance Ratio | Peeling Ratio | Thermal Expansion Coefficient |
|---|---|---|---|---|
|  |  | $\Omega \cdot m^2$ | Marks/cm$^2$ | 1/°C |
| Examples of Present Invention | 1 | $5.0 \times 10^{-4}$ | 0.05 | $1.13 \times 10^{-5}$ |
|  | 2 | $6.0 \times 10^{-4}$ | 0.1 | $1.15 \times 10^{-5}$ |
|  | 3 | $6.0 \times 10^{-4}$ | 0.1 | $1.12 \times 10^{-5}$ |
|  | 4 | $3.0 \times 10^{-4}$ | 0.05 | $1.12 \times 10^{-5}$ |
|  | 5 | $6.0 \times 10^{-4}$ | 0.1 | $1.13 \times 10^{-5}$ |
|  | 6 | $1.0 \times 10^{-4}$ | 0 | $1,11 \times 10^{-5}$ |
|  | 7 | $5.0 \times 10^{-4}$ | 0.1 | $1.15 \times 10^{-5}$ |
|  | 8 | $4.0 \times 10^{-4}$ | 0.05 | $1.14 \times 10^{-5}$ |
|  | 9 | $1.0 \times 10^{-4}$ | 0 | $1.13 \times 10^{-5}$ |
|  | 10 | $5.0 \times 10^{-4}$ | 0.05 | $1.14 \times 10^{-5}$ |
|  | 11 | $5.0 \times 10^{-4}$ | 0.1 | $1.15 \times 10^{-5}$ |
|  | 12 | $6.0 \times 10^{-4}$ | 0.05 | $1.14 \times 10^{-5}$ |
|  | 13 | $6.0 \times 10^{-4}$ | 0.1 | $1.13 \times 10^{-5}$ |
|  | 14 | $5.0 \times 10^{-4}$ | 0 | $1.15 \times 10^{-5}$ |
|  | 15 | $2.0 \times 10^{-4}$ | 0 | $1.16 \times 10^{-5}$ |
|  | 16 | $1.0 \times 10^{-4}$ | 0.1 | $1.12 \times 10^{-5}$ |
|  | 1 7 | $5.0 \times 10^{-4}$ | 0.05 | $1.14 \times 10^{-5}$ |
|  | 18 | $5.0 \times 10^{-4}$ | 0 | $1.11 \times 10^{-5}$ |
|  | 19 | $4.0 \times 10^{-4}$ | 0.05 | $1.11 \times 10^{-5}$ |
|  | 20 | $4.5 \times 10^{-4}$ | 0 | $1.15 \times 10^{-5}$ |

Table 4

|  | Steel No. | Contact Resistance Ratio | Peeling Ratio | Thermal Expansion Coefficient |
|---|---|---|---|---|
|  |  | $\Omega \cdot m^2$ | Marks/cm$^2$ | 1/°C |
| Comparative Examples | 21 | $2.0 \times 10^{-3}$ | 0.2 | $1.16 \times 10^{-5}$ |
|  | 22 | $9.0 \times 10^{-4}$ | 0.3 | $1.16 \times 10^{-5}$ |
|  | 23 | $2.0 \times 10^{-4}$ | 0.1 | $1.21 \times 10^{-5}$ |
|  | 24 | $1.0 \times 10^{-3}$ | 0.3 | $1.15 \times 10^{-5}$ |
|  | 25 | $7.0 \times 10^{-4}$ | 0.1 | $1.22 \times 10^{-5}$ |
|  | 26 | $3.0 \times 10^{-3}$ | 0.4 | $1.15 \times 10^{-5}$ |
|  | 27 | $1.0 \times 10^{-3}$ | 0.3 | $1.17 \times 10^{-5}$ |
|  | 28 | $5.0 \times 10^{-3}$ | 0.3 | $1.15 \times 10^{-5}$ |
|  | 29 | $7.0 \times 10^{-3}$ | 0.2 | $1.15 \times 10^{-5}$ |
| Comparative Example REM | 30 | $6.0 \times 10^{-4}$ | 0.1 | $1.17 \times 10^{-5}$ |

In Steel Nos. 1 to 20, both of the electrical conductivity and the adhesion of the oxide film which are the targets of the present invention were satisfied, and low thermal expansion which is the fundamental property was achieved. As a result of measuring the surfaces of Steel Nos. 1 to 20 by X-ray diffraction analysis, the Mn-rich oxide film (oxide film in which Mn is concentrated) containing $Cr_2O_3$ as a major component was formed in the surfaces. In the steel sheets of Steel Nos. 1 to 20, the properties equivalent to those of the REM-added ferritic stainless steel sheet (Steel No. 30) well-known in the related art were realized. It was found from the above results that, when the content of each element and Mn/(Si+Al) satisfy the defined ranges of the present invention, electrical conductivity at a high temperature can be imparted without deteriorating excellent oxidation resistance of the $Cr_2O_3$ film.

Steel No. 20 had the same components as Steel No. 2. Regarding Steel No. 20, the test sample of Steel No. 2 was subjected to a pre-oxidation treatment in the air at 800°C for 12 hours, and then the oxidation test was performed. Next, the electrical conductivity and the adhesion were evaluated. In Steel No. 20, the electrical conductivity and the adhesion of the oxide film were improved by the pre-oxidation treatment. By performing the pre-oxidation treatment defined in the present invention, the electrical conductivity and the adhesion of the oxide film can be improved even with the steels having the same components. According to the X-ray diffraction analysis of the surface, the oxide film of the steel No. 20 contained $Cr_2O_3$ as a major component and contained 20% of $Cr_2MnO_4$.

In Steel Nos. 21, 22, 24, and 26 to 29, either one or both of the electrical conductivity and the adhesion of the oxide film which are the targets of the present invention were not able to be obtained. It was found from the above results that, when either one of the content of each element or Mn/(Si+Al) is out of the defined range of the present invention, it is difficult to obtain both of the electrical conductivity and the adhesion of the oxide film.

In Steel Nos. 23 and 25, the electrical conductivity and the adhesion of the oxide film were in the target ranges; however, low thermal expansion which is the fundamental property was not achieved. It was found from the above results that it is necessary to add Cr and Mo at contents in the defined ranges in order to obtain the fundamental property.

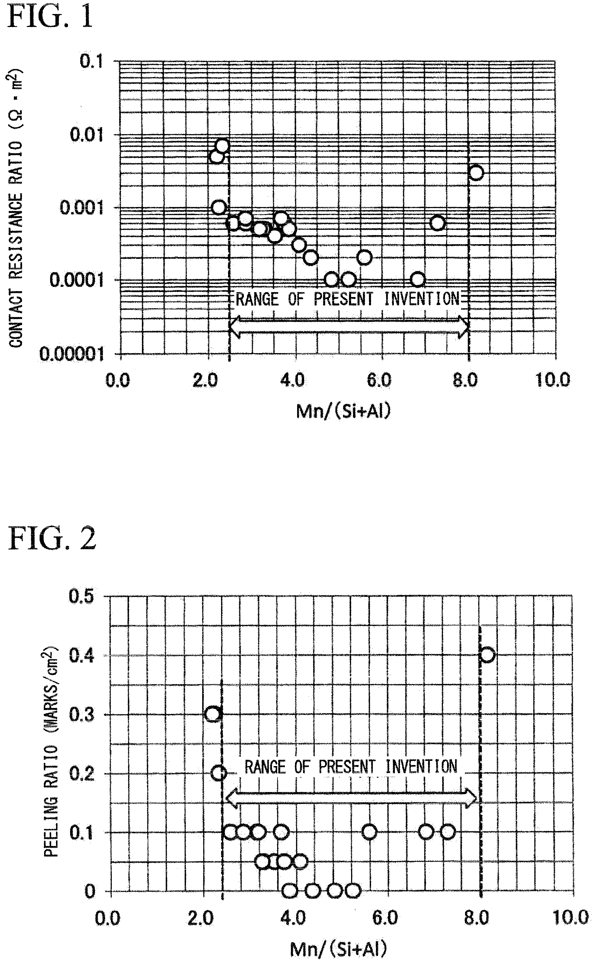

Regarding the steel sheets in which the content of each element satisfied the defined range of the present invention (Steel Nos. 1 to 20, 26, and 27), relationships between Mn/(Si+Al) and the contact resistance ratio at 750°C and the peeling ratio are shown in FIGS. 1 and 2. The following was found from the above results. In order to obtain the electrical conductivity (contact resistance ratio) and the adhesion of the oxide film, which are the target of the present invention, without deteriorating the excellent adhesion of the $Cr_2O_3$ film, it is important to control the content of each element to be in the defined range of the present invention and to control Mn/(Si+Al) to be in the range of 2.5 to 8.0. It was also found that the preferable range of Mn/(Si+Al) in which the properties including both of the electrical conductivity and the adhesion of the oxide film are obtained is 4.0 to 7.0.

Industrial Applicability

According to the present invention, by defining the range of each element and the range of Mn/(Si+Al) as described above, a ferritic stainless steel sheet having both of excellent electrical conductivity and excellent adhesion of an oxide film when being used for a SOFC for a long period of time can be provided, irrespective of addition of an expensive rare earth element. The ferritic stainless steel according to the present invention can be industrially produced irrespective of a special production method.

**Claims**

1. A ferritic stainless steel sheet consisting of: by mass%,

   C: 0.02% or less;
   Si: 0.01 to 0.15%;
   Mn: 0.3% to 1%;
   P: 0.04% or less;
   S: 0.003% or less;
   Cr: 20% to 25%;
   Mo: 0.5% to 2%;
   Al: 0.01 to 0.1%;
   N: 0.02% or less;
   Nb: 0.001% to 0.5%,
   optionally one or more selected from the group consisting of
   Ti: 0.5% or less,
   V: 0.5% or less,
   Ni: 2% or less,
   Cu: 1% or less,

Sn: 1% or less,
B: 0.005% or less,
Mg: 0.005% or less,
Ca: 0.005% or less,
W: 1% or less,
Co: 1% or less,
Sb: 0.5% or less,
Zr: 0.1% or less,
La: 0.1% or less,
Y: 0.1% or less, and
REM: 0.1% or less, and
a balance of Fe and unavoidable impurities,
wherein an expression (1) is satisfied:

$$2.5 < Mn/(Si+Al) < 8.0 \quad ... \quad (1),$$

and
wherein Mn, Si, and Al represent the contents (mass%) of the respective elements,
wherein an oxide film excellent in electrical conductivity and adhesion in which Cr and Mn are concentrated is formed on a steel sheet surface, and
the oxide film contains $Cr_2O_3$ as a major component and 10% or more of $Cr_2MnO_4$.

2. A method for producing a ferritic stainless steel sheet having an oxide film excellent in electrical conductivity and adhesion, the method comprising:
subjecting the ferritic stainless steel sheet according to claim 1 to a pre-oxidation treatment in a temperature range of 500°C to 1000°C for 24 hours or shorter.


**Patentansprüche**

1. Ein ferritisches Edelstahlblech, bestehend aus: bezogen auf Massen-%,

C: 0,02% oder weniger;
Si: 0,01 bis 0,15%;
Mn: 0,3% bis 1%;
P: 0,04% oder weniger;
S: 0,003% oder weniger;
Cr: 20% bis 25%;
Mo: 0,5% bis 2%;
Al: 0,01 bis 0,1%;
N: 0,02% oder weniger;
Nb: 0,001% bis 0,5%,
gegebenenfalls eines oder mehrere ausgewählt aus der Gruppe bestehend aus
Ti: 0,5% oder weniger,
V: 0,5% oder weniger,
Ni: 2% oder weniger,
Cu: 1% oder weniger,
Sn: 1% oder weniger,
B: 0,005% oder weniger,
Mg: 0,005% oder weniger,
Ca: 0,005% oder weniger,
W: 1% oder weniger,
Co: 1% oder weniger,
Sb: 0,5% oder weniger,
Zr: 0,1% oder weniger,
La: 0,1% oder weniger,
Y: 0,1% oder weniger und

Seltenerdmetalle: 0,1% oder weniger, und
einen Rest von Fe und unvermeidbaren Verunreinigungen, wobei ein Ausdruck (1) erfüllt ist:

$$2,5 < Mn/(Si+Al) < 8,0 \quad ... \quad (1),$$

und
wobei Mn, Si und Al die Gehalte (Massen-%) der jeweiligen Elemente darstellen,
wobei ein Oxidfilm mit hervorragender elektrischer Leitfähigkeit und Haftung, in welchem Cr und Mn konzentriert sind, auf einer Oberfläche des Stahlblechs gebildet ist, und
der Oxidfilm $Cr_2O_3$ als eine Hauptkomponente und 10% oder mehr an $Cr_2MnO_4$ enthält.

2. Ein Verfahren zur Herstellung eines ferritischen Edelstahlblechs mit einem Oxidfilm mit hervorragender elektrischer Leitfähigkeit und Haftung, wobei das Verfahren umfasst:
Unterziehen des ferritischen Edelstahlblechs gemäß Anspruch 1 einer Voroxidationsbehandlung in einem Temperaturbereich von 500°C bis 1000°C für 24 Stunden oder kürzer.

**Revendications**

1. Tôle d'acier inoxydable ferritique consistant en : en % en masse,

C : 0,02 % ou inférieur ;
Si : 0,01 à 0,15 % ;
Mn : 0,3 % à 1 % ;
P : 0,04 % ou inférieur ;
S : 0,003 % ou inférieur ;
Cr : 20 % à 25 % ;
Mo : 0,5 % à 2 % ;
Al : 0,01 à 0,1 % ;
N : 0,02 % ou inférieur ;
Nb : 0,001 % à 0,5 %,
éventuellement un ou plusieurs choisis dans le groupe consistant en
Ti : 0,5 % ou inférieur,
V : 0,5 % ou inférieur,
Ni : 2 % ou inférieur,
Cu : 1 % ou inférieur,
Sn : 1 % ou inférieur,
B : 0,005 % ou inférieur,
Mg : 0,005 % ou inférieur,
Ca : 0,005 % ou inférieur,
W : 1 % ou inférieur,
Co : 1 % ou inférieur,
Sb : 0,5 % ou inférieur,
Zr : 0,1 % ou inférieur
La : 0,1 % ou inférieur,
Y : 0,1 % ou inférieur, et
REM : 0,1 % ou inférieur, et
un reste de Fe et d'impuretés inévitables,
dans laquelle une expression (1) est satisfaite :

$$2,5 < Mn/(Si+Al) < 8,0 \quad ... \quad (1),$$

et
dans laquelle Mn, Si et Al représentent les teneurs (% en masse) des éléments respectifs,
dans laquelle un film d'oxyde d'excellentes conductivité électrique et adhérence dans lequel Cr et Mn sont concentrés est formé sur une surface de tôle d'acier, et

le film d'oxyde contient $Cr_2O_3$ comme un constituant principal et 10 % ou plus de $Cr_2MnO_4$.

2. Procédé de production d'une tôle d'acier inoxydable ferritique ayant un film d'oxyde d'excellentes conductivité électrique et adhérence, le procédé consistant :
à soumettre la tôle d'acier inoxydable ferritique selon la revendication 1 à un traitement de pré-oxydation dans un intervalle de température de 500°C à 1 000°C pendant 24 heures ou moins.

## FIG. 1

## FIG. 2

## REFERENCES CITED IN THE DESCRIPTION

**Patent documents cited in the description**

- JP 2012157540 A
- JP 2013129692 A
- JP 2003173795 A
- JP 2005320625 A
- JP 2006057153 A
- JP 2006009056 A
- JP 2012067391 A
- WO 2008013498 A1
- JP H08109443 A
- JP 2006318652 A

**Non-patent literature cited in the description**

- *Heat Treatment,* 1993, vol. 33, 251